# EUROPEAN PATENT APPLICATION

(11) **EP 1 718 033 A1**
(43) Date of publication of application: **02.11.2006**
(21) Application number: 05445025.9
(22) Date of filing: 27.04.2005
(51) Int. Cl.: H04L 29/12

(54) **A method and apparatus for registering internet domain names**

(71) Applicant: TELEFONAKTIEBOLAGET LM ERICSSON (publ), 164 83 Stockholm (SE)
(72) Inventor: Skog, Robert, 16576 Hässelby (SE)
(74) Representative: Larfeldt, Helene

(57) **Abstract**

A method and apparatus for registering an Internet domain name for a mobile terminal (A) capable of packet-switched communication, wherein an IP address has been assigned fer the terminal in a mobile network. A domain name is first determined for the terminal, and a domain name registration request (3:4) is then sent from the mobile network to a domain name registration authority (306) on behalf of the terminal, including said domain name and said assigned IP address. If the assigned IP address later has become invalid for the terminal, a domain name dercgistration request (3:6) is preferably sent indicating that the current domain name registration is to be deleted.

## Description

### TECHNICAL FIELD

The present invention relates generally to a method and apparatus for registering Internet domain names for mobile terminals. In particular, a solution is provided for updating the registration of a domain name for a mobile terminal to which an IP address is temporarily assigned.

### BACKGROUND OF THE INVENTION AND PRIOR ART

The advent of Internet has created a vast industry for making all kinds of information and data available to any user operating a communication terminal equipped with a web browser. A "host server" or the like, offering information over the Internet, can be accessed by means of a domain name that has been registered for the host server. A domain name is basically built up with more or less intelligible words separated by dots, e.g. a URL (Unified Resource Locator) such as www.ericsson.com, which a user can enter to his/her terminal in order to access a corresponding server to retrieve desired information or content.

However, a domain name does not serve as a routable network address that can be used for communicating requests or other messages. Therefore, each domain name must have an associated routable IP address that has been assigned to the corresponding host server. IP addresses are typically built up by numbers separated by dots, e.g. 192.78.32.01, according to well-known structures and rules. Thus, registering a domain name for a host server means that, according to conventional procedures, it is registered with a domain name registration authority, as being associated with the routable IP address valid for the server.

Registrations of domain names are made in specific domain name servers that are organized in a so-called "DNS (Domain Name Service) tree" structure, as is well-known in the art. A fixed host server typically has a permanent IP address and will therefore not require any updating, but also end-users can register their PC stations as temporary Internet host servers, using temporary IP addresses. In that case, the association of domain name with an IP address must be updated with the registration authority each time the IP address is changed.

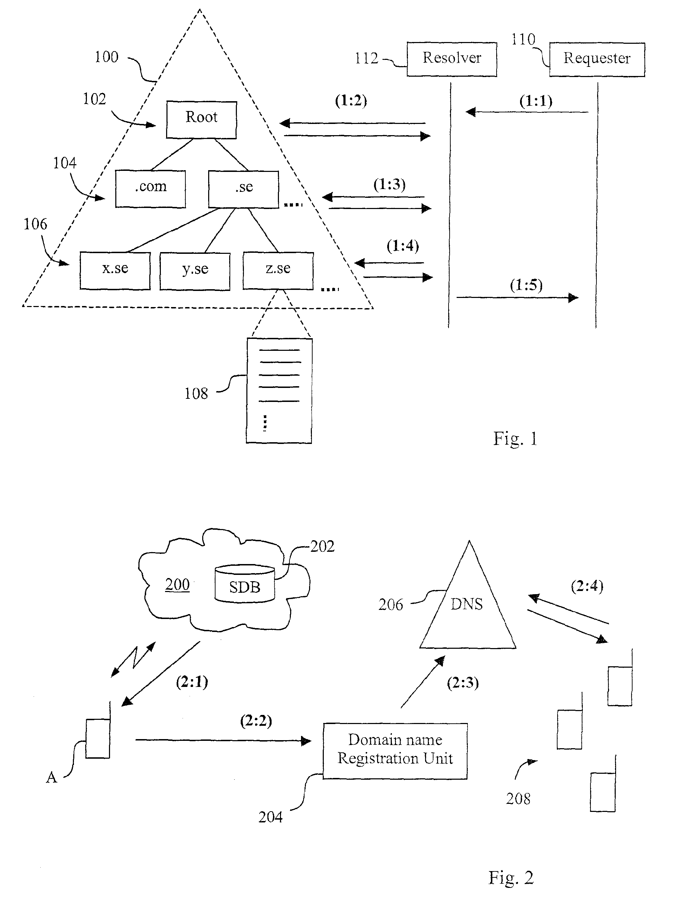

Fig. 1 illustrates schematically how a DNS tree 100 is built logically, comprising a plurality of servers of which just a few are shown here. In effect, the DNS servers make up a distributed hierarchically structured database containing registered domain names and their associated IP addresses, where each level in the tree corresponds to a word in a domain name as separated by the dots therein. At the top level 102 of the tree is a singular root server, and the next level 104 contains a number of servers representing a word after the last dot in a domain name, e.g. ".com" and ".se" as illustrated, which is either a generic code or a country code. The next level 106 contains a number of "top level domain" servers representing the next word in a domain name, e.g. "x.se", "y.se", "z.se" as illustrated, and so forth. In this example, the server representing the domain name "z.se" covers a set 108 of complete domain names and their corresponding IP addresses, although in reality, the DNS tree includes many more possible levels.

Briefly described, a "requester" 110 (in the figure representing, e.g., a PC or a mobile terminal equipped with a web browser) may intend to send a message directed to a specific domain name that a user has entered, without initially knowing what routable IP address it is associated with. In order to obtain the associated IP address for actually communicating the message, the domain name is first transferred to a "resolver" 112, in a first step 1:1, which is an entity adapted to access the DNS tree at different levels to retrieve the routable IP address, basically as follows. In practice, a resolver may logically reside in the operative system running in the requester equipment, or in a node in the access network used by the requester, sometimes referred to as the "DNS server".

In operation, the resolver 112 may cache IP address information on earlier accessed domain names, which can be used in subsequent inquiries. However, if the resolver does not recognise the domain name at all, i.e. no cached address information is found, it will query the DNS tree at successive levels, one at a time. Thus, the resolver 112 will initially query the root server at the first level 102 in the DNS tree 100 regarding the last field in the domain name, e.g. ".se ?", if not known already. The root server then responds by pointing to the corresponding server in the next level 104. When querying the ".se" server in level 104 regarding the next field in the domain name, e.g. "z.se ?", it will respond by pointing to the corresponding server in the next level 106, and so forth, until the last server is reached finally providing the routable IP address associated with the complete domain name.

With the emergence of 3G mobile telephony, new packet-based communication technologies have been developed using IP addressing. For example, GPRS (General Packet Radio Service) and WCDMA (Wideband Code Division Multiple Access) technologies support wireless multimedia telephony services that may involve packet-switched communication of data representing voice, images, text, documents, animations, audio files, video files, etc.

In this context, it is sometimes desirable for even a mobile terminal user, communicating by means of a radio connection to an access network, to assign an Internet domain name to the mobile terminal by which he/she can be reached. Thereby, the mobile terminal can be used for basically hosting a server in order to make information or content stored therein available to other users. In this way, services and files in any formats stored in the terminal can be made available for downloading, such as a database, a collection of documents, pictures or music files, etc. In addition, it may also be desirable to register one domain name for different communication devices such that a user can be reached on a specific domain name, e.g. www.robertskog.se, regardless of which device is currently registered as host server for that domain name.

Generally, a service is currently available for registering domain names for mobile terminals, just as for a fixed PC station as described above, to act as host servers offering services and/or content available for downloading. Fig. 2 illustrates a conventional procedure for registering a domain name for a mobile terminal A currently in connection with a mobile access network 200. When terminal A connects to the access network, a PDP (Packet Data Control) context including certain communication parameters is established by the network 200 as to prepare for any upcoming data session, which is a normal procedure in any packet-based mobile networks. If the accessed network 200 is not the "home" network of the terminal, i.e. the terminal is currently visiting network 200 but belongs by subscription to another home network, the PDP context is defined in the home network. For simplicity throughout this description, the access network used is assumed to be the home network of terminal A.

Establishing a PDP context includes allocating a temporary IP address to the terminal, in order to be able to communicate data packets with the terminal in the future. Basically, the PDP context can be established at any time, but most typically as soon as the terminal has been powered on. In the network 200, the temporary IP address assigned to the terminal A is stored together with an identity of the terminal/subscriber, such as the MSISDN (Mobile Subscriber ISDN Number) or the equivalent, in a session database SDB 202. The procedure of establishing a PDP context is well-known and is not necessary to describe here further to understand the context of the present invention.

Thus, as a PDP context is established for terminal A, it receives the assigned temporary IP address from network 200 in a first step 2:1, to be used for packet communication throughout its active period until the mobile terminal is disconnected. When the terminal is connected once again, a new PDP context is established rendering a new temporary IP address, and so forth.

Registering a domain name for a mobile terminal requires that a specific software for this aim is installed in the terminal. Thus, this piece of software issues a registration request message which is sent to a domain name registration authority, as represented by a domain name registration unit 204, in a step 2:2, including the desired domain name together with the temporary IP address as received in step 2:1. The domain name is then registered with the IP address in the DNS tree 206 in a step 2:3, such that any other user 208, mobile or fixed, can retrieve the current IP address, e.g. by means of a resolver (not shown) as described above, which is illustrated as a final general step **2:4.**

However, there are some serious problems and drawbacks associated with this current procedure for registering domain names with temporary IP addresses for mobile terminals. As mentioned above, it is necessary to acquire and install a specific software program in the mobile terminal for effecting the registration process by sending domain name registration requests etc., in order to maintain a domain name for the mobile terminal. A certain amount of signalling, including exchanging authentication information, is thus required by the mobile terminal to gain the registration, consuming battery and precious bandwidth over the air.

Furthermore, it is undesirable that any mobile terminal in the conventional solution can register any domain name with a domain name registration authority, as in step 2:2 described above, since anyone could then easily "hijack" a domain name from another user and register it for his/her own IP address, totally out of control of the original user. To prevent this, the conventional solution must be provided with security involving the establishment of user ID's and passwords and requiring extra handling routines and management thereof, which is a further drawback in this context.

Moreover, when a registered mobile terminal is eventually disconnected, e.g. when turned off or due to lost radio contact for some reason, the domain name registration will remain for its temporary IP address, even though the terminal no longer can be reached thereby. The DNS tree will therefore inevitably contain out-of-date information during a relatively long time-out period after disconnection, or until a new registration is made for the domain name.

### SUMMARY OF THE INVENTION

It is an object of the present invention to generally avoid the problems outlined above and to provide a secure yet simple way of registering a domain name for a mobile terminal based on a temporarily assigned IP address. Another object of the present invention is to achieve automatic updating of a domain name registration whenever the temporary IP address status is changed, without requiring any specific software program or measures in the mobile terminal to that effect. Another object of the present invention is to eliminate the need for communicating registration messages and authentication data with the mobile terminal in question during domain name registration. Another object is to keep the DNS tree up-to-date to a greater extent.

These objects and others are obtained by providing a method and apparatus for registering an Internet domain name for a mobile terminal capable of packet-switched communication, wherein an IP address has been assigned for the terminal in a mobile network. In the inventive method, a domain name is determined for the terminal, and a domain name registration request is sent from said mobile network to a domain name registration authority on behalf of the terminal, including said domain name and said assigned IP address.

The domain name registration request is preferably sent in response to storing the assigned IP address together with a terminal identity, e.g. MSISDN and/or IMSI, in a session database in the mobile network, although it may not be necessary to send it immediately thereafter.

The domain name may be determined according to a predetermined scheme based on the MSISDN or other identity of the terminal. Alternatively, the domain name may be determined by mapping the MSISDN or other identity of the terminal to a desired domain name. This mapping is then preferably made in a name mapping database in which the MSISDN of subscribers' terminals, or other terminal identities, are mapped to desired domain names according to their subscription profiles. Further, it may be determined that domain name registration is requested for the terminal, based on subscription specifics or the like.

If the assigned IP address has become invalid for the terminal, a domain name deregistration request is preferably sent to the domain name registration authority, indicating that the current domain name registration is to be deleted. The domain name deregistration request can basically be the same as said domain name registration request, although with the new IP address set to zero or to another predetermined address indicating that the terminal is no longer connected. The validity of the assigned IP address may be checked by determining whether a PDP context for the terminal has been inactivated.

Alternatively, the domain name deregistration request may be sent in response to receiving a disconnection message that indicates disconnection of the mobile terminal and invalidity of the assigned IP address. The disconnection message may be a conventional "PDP context deactivation" message.

The domain name registration request is preferably issued from a GGSN node or a session database in the mobile network.

The inventive apparatus comprises means for determining a domain name for the terminal, and means for sending a domain name registration request from said mobile network to a domain name registration authority on behalf of the terminal, including said domain name and said assigned IP address.

The apparatus is preferably adapted to send said the domain name registration request in response to storing the assigned IP address together with a terminal identity, e.g. MSISDN and/or IMSI, in a session database in the mobile network. Thereby, the network's association between the assigned IP address and terminal identity is utilised to provide security.

The apparatus may also be adapted to determine the domain name according to a predetermined scheme based on the MSISDN or other identity of the terminal. Alternatively, the apparatus may be adapted to determine the domain name by mapping the MSISDN or other identity of the terminal to a desired domain name. In that case, the apparatus may be further adapted to make the mapping in a name mapping database in which the MSISDN of subscribers' terminals, or other terminal identities, are mapped to desired domain names according to their subscription profiles. The apparatus may further be adapted to determine that domain name registration is requested for the terminal, based on subscription specifics or the like.

Preferably, the apparatus also comprises means for sending a domain name deregistration request to the domain name registration authority, indicating that the current domain name registration is to be deleted, if the assigned IP address has become invalid for the terminal. The domain name deregistration request may basically be the same as said domain name registration request, although with the new IP address set to zero or to another predetermined address indicating that the terminal is not logged-on.

The apparatus may be adapted to check the validity of the assigned IP address by determining whether a PDP context for the terminal has been inactivated. Alternatively, the apparatus may be adapted to send the domain name deregistration request in response to receiving a disconnection message that indicates disconnection of the mobile terminal and invalidity of the assigned IP address. The disconnection message may be a conventional "PDP context deactivation" message.

Finally, the apparatus may be implemented in a GGSN node or session database in the mobile network.

### BRIEF DESCRIPTION OF THE DRAWINGS

The present invention will now be described in more detail and with reference to the accompanying drawings, in which:
Fig. 1 is a schematic block diagram illustrating a conventional signalling procedure for obtaining an IP address from a DNS tree based on a given domain name, according to the prior art.
Fig. 2 is a schematic block diagram illustrating a procedure for registering a domain name, according to the prior art.
Fig. 3 is a schematic block diagram illustrating a signalling procedure for registering a domain name or updating the registration of a domain name, in accordance with an embodiment of the present solution.
Fig. 4 is a schematic block diagram illustrating a signalling procedure for registering a domain name or updating the registration of a domain name, in accordance with another embodiment of the present solution.
Fig. 5 is a flow chart illustrating a basic procedure for updating the registration of a domain name, in accordance with another embodiment of the present solution.

### DESCRIPTION OF PREFERRED EMBODIMENTS

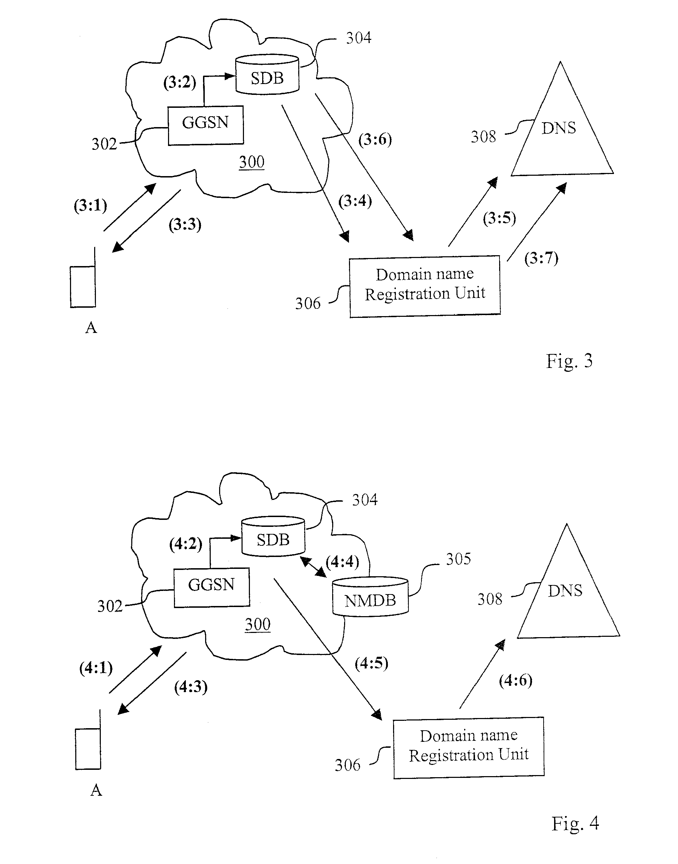

An embodiment of the present solution will now be described with reference to Fig. 3, where a mobile terminal A is connected to a mobile access network 300 capable of packet-based communication, e.g. a WCDMA network or a GPRS network. As above, it is assumed that network 300 is the home network of terminal A. In a first step 3:1, terminal A makes initial access to network 300 when the terminal is powered-on. A user may also activate a data service or application in terminal A requiring packet-based communication.

In response thereto, network 300 will assign a temporary IP address to the terminal during the above-mentioned creation of a PDP context. Typically, at least in WCDMA networks and GPRS networks, a node in the network called GGSN (Gateway GPRS Support Node) 302 is responsible for handling the creation of PDP context, more specifically by fetching a temporary IP address from a so-called DHCP (Dynamic Host Configuration Protocol) server (not shown) in the network which is responsible for handing out idle temporary IP addresses to active mobile terminals. In some cases, the same "static" IP address is always exclusively assigned to a specific mobile terminal whenever logged-on, depending on the subscription, which is reserved to that terminal. Otherwise, a new "dynamic" IP address is assigned out of a limited number of available idle IP addresses in the network. In this description, the term "temporary IP address" is intended to encompass both static and dynamic address assignments.

GGSN 302 then enters the IP address together with the MSISDN and/or IMSI (International Mobile Subscriber Identity) of the terminal A in a session database SDB 304, in a next step **3:2**, where this information is stored as long as the terminal remains connected, i.e. logged-on. Thus, an association between the MSISDN (IMSI) and assigned IP address of the terminal is safely made in the network. The assigned temporary IP address is also communicated to the terminal A, in a step **3:3**. So far, the procedure has been basically executed according to conventional routines.

In the present solution, however, it is not required that terminal A must send any domain name registration message to a domain name registration authority, as in step 2:2 in the conventional procedure of Fig. 2, in order to act as a host server using that domain name. Thus at this point, it is somehow detected in the network 300 that it is required to register a domain name for the terminal A. For example, domain name registration may be a specific feature included in the subscription defined for terminal A. Network 300 therefore issues a domain name registration request message to a domain name registration authority, as represented by domain name registration unit 306, on behalf of terminal A, in a following step **3:4**, including the desired domain name together with the assigned temporary IP address that was stored in step 3:2. This registration request is preferably sent basically in response to storing the assigned IP address together with the MSISDN (IMSI), although it may not be necessary to send it immediately thereafter.

In this embodiment, the domain name is determined according to a predetermined scheme based on the MSISDN of the terminal or other available terminal identity. This scheme may have been specifically defined for the subscription in question, or generally for this service. For example, if the MSISDN is 070123456, the domain name may automatically be set to: www.070123455.se, or according to any other suitable scheme.

The domain name is then registered along with the assigned IP address in the DNS tree 308, in a next step **3:5**. In this way, a domain name registration request is safely sent to the domain name registration authority from the network 300, instead of over the air from terminal A, each time it obtains a new temporary IP address, and the terminal per se is not affected at all by this function. In particular, it is possible for the network 300 to have established a trusted and secure relation with the domain registration authority, using well-protected communication paths, etc, rather than relying on the mobile terminal to cater for the registration. Further, the domain name registration will be based on the association in the network 300 between a terminal identity, e.g. MSISDN and/or IMSI, (stemming from a SIM (Subscriber Identity Module) or the like in the terminal) and the assigned temporary IP address, ensuring that the registration is made for the authorised terminal and that no-one else can hijack and register the same domain name.

As mentioned above, the PDP context of the terminal is stored in session database SDB 304 as long as the terminal remains connected. If the terminal is somehow disconnected, either by handoff to another network, terminal powered-off or lost radio connection, the network preferably sends a domain name deregistration request to domain name registration unit 306, in a further step **3:6**, to remove the previous registration for the temporary IP address, which is now no longer valid. The deregistration request in step 3:6 may be a specific inactivation message, or may basically be the same message as the first one in step 3:4 although with the new IP address set to zero or to another predetermined address indicating that the terminal is no longer available on the registered IP address. In response thereto, the domain name registration unit 306 finally deletes the current domain name registration in the DNS tree 308, in a final step **3:7**.

The function of sending domain name registration requests to a domain registration authority can be implemented in any suitable node in the network 300, e.g. depending on the configuration of the present network. In preferred embodiments, the domain name registration request message may be issued from the session database SDB 304 or the node GGSN 302, although the present invention is not specifically limited in this respect.

Another embodiment of the present solution will now be described with reference to Fig. 4, showing the same components and nodes as in Fig. 3, with the addition of a specific name mapping database NMDP 305 in which the MSISDN of subscribers' terminals, or other terminal identities, are mapped to desired domain names according to their subscription profiles.

Again, terminal A generally makes initial access to network 300 in a first step **4:1**. After assigning a temporary IP address to the terminal, GGSN 302 enters the IP address together with the MSISDN and/or IMSI of the terminal A in the session database SDB 304, in a step **4:2,** and communicates it to the terminal A, in a step **4:3,** just as described above. In this embodiment, however, SDB 304 determines a desired domain name by consulting NMDB 305, based on the MSISDN of the terminal A, in a step **4:4.** By way of example, an MSISDN = 070123456 may map to a desired domain name such as www.robertskog.com.

SDB 304 then sends a domain name registration request message to domain name registration unit 306 on behalf of terminal A, in a step **4:5,** including the determined domain name together with the temporary IP address stored in step 4:2, which are registered in the DNS tree 308, in a final step **4:6.** Removing the domain name registration for the temporary IP address upon disconnection of the terminal A can be executed as according to steps 3:6 and 3:7 in Fig. 3, as described above, although not shown here in Fig. 4.

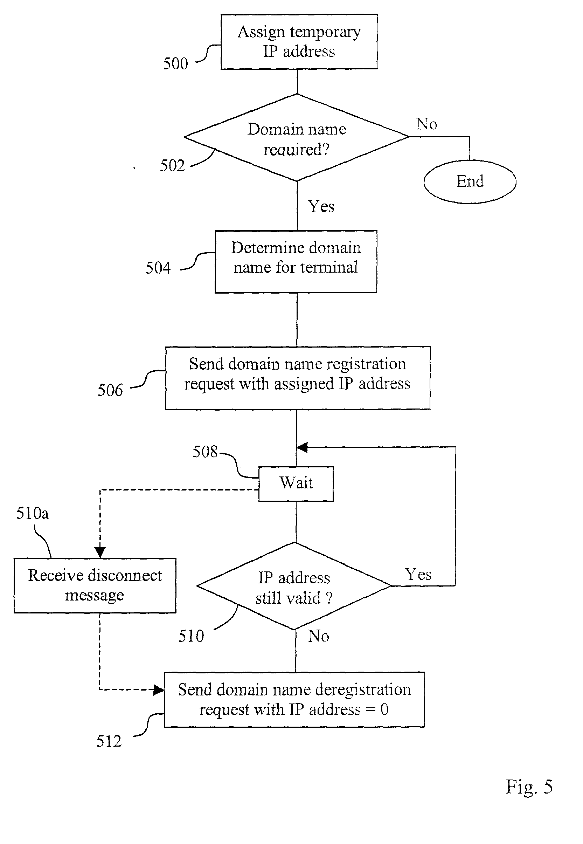

Finally, a basic procedure for registering a domain name, according to another embodiment, will now be described with reference to a flow chart shown in Fig. 5. This procedure is generally executed in a home network of a subscriber using a mobile terminal that has been connected to an access network capable of packet-switched communication. As in the previous embodiments, the registration procedure is preferably implemented as an "apparatus" in a session database node or in a GGSN node or both. The inventive apparatus may generally be implemented in any suitable node(s) in the network depending on its configuration, and the present invention is not limited in this respect. Furthermore, the accessed network may or may not be the "home" network of the subscriber, as discussed above.

In a first conventional step **500,** a temporary IP address is assigned to the terminal in order to enable packet-based communication, typically when a PDP context is created for the terminal upon connection to the access network, which is stored in the session database together with the MSISDN and/or IMSI of the terminal. In a next step **502,** it is determined whether it is required to register a domain name for this particular terminal, e.g. based on subscription specifics or the like. If not, this process may end as indicated in the figure. If a domain name is to be registered for the terminal, it is determined in a step **504** what domain name to register for this terminal. As described above, the domain name may be determined either according to a predetermined scheme based on the terminal's identity, typically the MSISDN, as in the embodiment of Fig. 3, or by mapping the MSISDN or other identity to a desired name, as in the embodiment of Fig. 4.

Thereafter, in a step **506,** a domain name registration request message is issued from the network to a domain name registration authority on behalf of the terminal. This message includes the domain name determined in step 504 and the temporary IP address assigned to the terminal in step 500 (safely associated with its MSISDN and/or IMSI), for registration in the DNS tree as previously described. Here, it should be mentioned that if a private (externally non-routable) IP address has been assigned for the terminal, it is necessary to use a routable IP address of a reverse proxy or NAT in the domain name registration, which however lies outside the scope of the present invention and will therefore not be described here further.

After a certain period of time, as indicated by a waiting step **508,** it may be checked whether the temporary IP address sent in step 506 is still valid for the terminal, e.g. by determining if its PDP context is still active or not, in a next step **510.** If the registered IP address is found to be invalid, a domain name deregistration request message is issued from the network in a step **512** indicating that the current domain name registration is to be deleted, preferably using the same message as in step 506 with the IP address set to zero, as indicated in the figure. If the IP address is found to be still valid in step 510, the process returns to the waiting step 508 in order to make further validity checks at regular intervals until the terminal cannot be reached at the registered IP address anymore. In this way, if the validity check is made fairly frequently, the DNS tree can be updated as soon as the terminal is disconnected.

Depending on the implementation of this solution, the process may instead simply wait until a disconnection message or the like is received in an alternative step **510a,** that indicates disconnection of the mobile terminal and invalidity of the assigned and registered IP address. A disconnection message may be a conventional "PDP context deactivation" message, which then finally would trigger the execution of step 512.

In the above-described solution for registering a domain name for a mobile terminal based on a temporary IP address, the burden of communicating with the domain registration authority is relieved from the terminal. Instead, the registration process is safely handled by the mobile network that also assigns the temporary IP address to the terminal, preferably using a trusted relation between the network and the domain registration authority. In particular, it is not required that the terminal must be provided with domain name registration functionality by acquiring a specific software program or similar. Automatic updating of a domain name registration is obtained whenever the temporary IP address status is changed, without requiring any action whatsoever at the mobile terminal to that effect, thus not consuming any battery and bandwidth.

Existing routines for authenticating the terminal in mobile networks are also utilised to ensure security. Since the domain name registration is based on the mobile network's association between a terminal identity, e.g. MSISDN and/or IMSI, and the assigned temporary IP address, no-one else will be able to steal or hijack a domain name and register it for his/her own IP address. In the present invention, it is not necessary to establish user ID's, passwords and extra handling routines and management thereof, in order to prevent hijacking of domain names.

A further advantage is that when the terminal is disconnected, e.g. when turned off or accidentally due to lost radio contact for some reason, the domain name registration can be deleted automatically after a relatively short time-out period, and the DNS information will be kept more up-to-date, as compared to the above-described prior art solution of Fig. 2.

It should be noted that the present inventive solution would be valuable even when the same "static" IP address is always exclusively assigned to a particular mobile terminal whenever logged-on, which may be the case for certain subscriptions, by providing security and correct up-to-date information to the DNS tree that indicates whether the user can be reached or not.

While the invention has been described with reference to specific exemplary embodiments, the description is only intended to illustrate the inventive concept and should not be taken as limiting the scope of the invention. Various alternatives, modifications and equivalents may be used without departing from the spirit of the invention, which is defined by the appended claims.

## Claims

1. A method of registering an Internet domain name for a mobile terminal capable of packet-switched communication, wherein an IP address has been assigned for the terminal in a mobile network, **characterised by** the following steps:
- determining a domain name for the terminal, and
- sending a domain name registration request from said mobile network to a domain name registration authority on behalf of the terminal, including said domain name and said assigned IP address.

2. A method according to claim 1, **characterised in that** the domain name registration request is sent in response to storing the assigned IP address together with a terminal identity, e.g. MSISDN and/or IMSI, in a session database in the mobile network.

3. A method according to claim 1 or 2, **characterised in that** the domain name is determined according to a predetermined scheme based on the MSISDN or other identity of the terminal.

4. A method according to claim 1 or 2, **characterised in that** the domain name is determined by mapping the MSISDN or other identity of the terminal to a desired domain name.

5. A method according to claim 4, **characterised in that** said mapping is made in a name mapping database in which the MSISDN of subscribers' terminals, or other terminal identities, are mapped to desired domain names according to their subscription profiles.

6. A method according to any of claims 1-5, **characterised in that** it is determined that domain name registration is requested for the terminal, based on subscription specifics or the like.

7. A method according to any of claims 1-6, **characterised in that**, if the assigned IP address has become invalid for the terminal, a domain name deregistration request is sent to the domain name registration authority, indicating that the current domain name registration is to be deleted.

8. A method according to claim 7, **characterised in that** the domain name deregistration request is basically the same as said domain name registration request, although with the new IP address set to zero or to another predetermined address indicating that the terminal is no longer connected.

9. A method according to claim 7 or 8, **characterised in that** the validity of the assigned IP address is checked by determining whether a PDP context for the terminal has been inactivated.

10. A method according to claim 7 or 8, **characterised in that** said domain name deregistration request is sent in response to receiving a disconnection message that indicates disconnection of the mobile terminal and invalidity of the assigned IP address.

11. A method according to claim 10, **characterised in that** the disconnection message is a conventional "PDP context deactivation" message.

12. A method according to any of claims 1-11, **characterised in that** the domain name registration request is issued from a GGSN node or a session database in said mobile network.

13. An apparatus for registering an Internet domain name for a mobile terminal capable of packet-switched communication, wherein an IP address has been assigned for the terminal in a mobile network, **characterised by**:
- means for determining a domain name for the terminal, and
- means for sending a domain name registration request from said mobile network to a domain name registration authority on behalf of the terminal, including said domain name and said assigned IP address.

14. An apparatus according to claim 13, **characterised in that** the apparatus is adapted to send said the domain name registration request in response to storing the assigned IP address together with a terminal identity, e.g. MSISDN and/or IMSI, in a session database in the mobile network.

15. An apparatus according to claim 13 or 14, **characterised in that** the apparatus is adapted to determine the domain name according to a predetermined scheme based on the MSISDN or other identity of the terminal.

16. An apparatus according to claim 13 or 14, **characterised in that** the apparatus is adapted to determine the domain name by mapping the MSISDN or other identity of the terminal to a desired domain name.

17. An apparatus according to claim 16, **characterised in that** the apparatus is further adapted to make said mapping in a name mapping database in which the MSISDN of subscribers' terminals, or other terminal identities, are mapped to desired domain names according to their subscription profiles.

18. An apparatus according to any of claims 13-17, **characterised in that** the apparatus is adapted to determine that domain name registration is requested for the terminal, based on subscription specifics or the like.

19. An apparatus according to any of claims 13-17, **characterised in that** the apparatus further comprises means for sending a domain name deregistration request to the domain name registration authority, indicating that the current domain name registration is to be deleted, if the assigned IP address has become invalid for the terminal.

20. An apparatus according to claim 19, **characterised in that** the domain name deregistration request is basically the same as said domain name registration request, although with the new IP address set to zero or to another predetermined address indicating that the terminal is not logged-on.

21. An apparatus according to claim 19 or 20, **characterised in that** the apparatus is adapted to check the validity of the assigned IP address by determining whether a PDP context for the terminal has been inactivated.

22. An apparatus according to claim 19 or 20, **characterised in that** the apparatus is adapted to send said domain name deregistration request in response to receiving a disconnection message that indicates disconnection of the mobile terminal and invalidity of the assigned IP address.

23. An apparatus according to claim 22, **characterised in that** the disconnection message is a conventional "PDP context deactivation" message.

24. An apparatus according to any of claims 13-23, **characterised in that** the apparatus is implemented in a GGSN node or session database in said mobile network.
